# EUROPEAN PATENT SPECIFICATION

(11) **EP 4 703 165 B1**
(45) Date of publication and mention of the grant of the patent: **14.10.2026**
(21) Application number: 25191949.4
(22) Date of filing: 25.07.2025
(51) Int. Cl.: B60J 5/10, B60Q 1/00, B60Q 1/30, B60Q 1/26

(54) **VEHICLE COMPRISING TAILGATE ASSEMBLY WITH TRANSVERSE TAILLIGHT RECESS**
FAHRZEUG MIT HECKKLAPPENANORDNUNG MIT QUERER HECKLEUCHTENAUSSPARUNG
VÉHICULE COMPRENANT UN HAYON ARRIÈRE AVEC ÉVIDEMENT DE FEU ARRIÈRE TRANSVERSAL

(30) Priority: 30.08.2024 CN 202411206230
(43) Date of publication of application: 04.03.2026
(73) Proprietor: Stellantis Auto SAS, 78300 Poissy (FR)
(72) Inventor: WANG, ZIYE, SHANGHAI, 200030 (CN); CHENG, LU, SHANGHAI, 200030 (CN); LIU, TAO CLAIRE, SHANGHAI, 200030 (CN); SONG, XIU MIN, SHANGHAI, 200030 (CN); LI, BING, SHANGHAI, 200030 (CN)
(74) Representative: ESIP

(56) References cited:
- CN-U- 219 806 756
- DE-A1- 102020 210 653
- DE-A1- 3 940 016

## Description

### RELATED FIELD

The present disclosure relates generally to the field of vehicles, and more specifically to a vehicle comprising a tailgate assembly with a transverse taillight recess.

### BACKGROUND

The rear of the vehicle is provided with a tailgate, a taillight mounted to the tailgate, and a handle for a user to open or close the tailgate. The user needs to grasp the handle and push it upwards when opening the tailgate.

In some vehicle models, the tailgate outer panel is provided with a taillight recess extending transversely, and the taillight is mounted into the taillight recess and connected to the handle for opening the tailgate, see document DE 10 2020 210653A1.

The defect of the existing structure is that due to the weight of the taillight itself, sagging may occur after long-term use, resulting in a visible gap formed between the taillight and the taillight recess, thereby affecting the aesthetics of the appearance of the vehicle.

### SUMMARY

An object of the present disclosure is to provide a vehicle comprising a tailgate assembly with a transverse taillight recess to overcome at least one of the defects of the prior art described above. That is, the vehicle according to the present disclosure can prevent the taillight from sagging in the taillight recess after being used for a long time, thereby ensuring the aesthetics of the rear side of the vehicle.

The present disclosure provides a vehicle comprising a tailgate assembly, the vehicle having a longitudinal direction indicative for a traveling direction, a transverse direction at an angle of 90 degrees relative to the longitudinal direction, and a vertical direction indicative for a direction perpendicular to the ground, the tailgate assembly comprising: a tailgate outer panel provided with a taillight recess extending along the transverse direction; a taillight mounted into the taillight recess, and comprising a housing; and a handle for pushing the tailgate assembly, the handle being provided in the taillight recess and connected to the housing, wherein the handle is connected to the tailgate outer panel by a first fixing portion; and wherein the housing comprises an abutting portion provided below the first fixing portion along the vertical direction and abutting against the tailgate outer panel along the longitudinal direction.

According to an optional embodiment of the present disclosure, the abutting portion and the first fixing portion are aligned with each other along the vertical direction.

According to an optional embodiment of the present disclosure, the handle comprises two first fixing portions symmetrical relative to a central position thereof along the transverse direction, and wherein the housing correspondingly comprises two abutting portions symmetrical relative to a central position thereof along the transverse direction.

According to an optional embodiment of the present disclosure, the abutting portion further comprises at least one reinforcing rib extending along the longitudinal direction.

According to an optional embodiment of the present disclosure, the first fixing portion is fixed to the tailgate outer panel by snapping, screwing, riveting, gluing or welding.

According to an optional embodiment of the present disclosure, the handle is connected to the housing by the first fixing portion.

According to an optional embodiment of the present disclosure, the handle comprises a second fixing portion fixed to the housing by snapping, screwing, riveting, gluing or welding.

According to an optional embodiment of the present disclosure, the handle comprises an operating portion for a user to push the tailgate assembly, and wherein the first fixing portion is closer to the operating portion than the second fixing portion.

According to an optional embodiment of the present disclosure, the first fixing portion comprises a first blind hole provided on the handle, and the tailgate outer panel is provided with a first through hole facing the first blind hole, such that the handle is fixed to the tailgate outer panel by a first screw passing through the first through hole and screwed into the first blind hole; and the second fixing portion comprises a second through hole provided on the handle, and the housing is provided with a second blind hole facing the second through hole, such that the handle is fixed to the housing by a second screw passing through the second through hole and screwed into the second blind hole.

Compared with the prior art, the tailgate assembly of the vehicle according to the present disclosure has a plurality of beneficial effects, especially: by providing the above abutting portion on the housing of the taillight, the taillight is prevented from rotating and sagging in the taillight recess of the tailgate outer panel, such that a visible gap can be avoided between the taillight and the taillight recess, and the aesthetic appearance of the vehicle is ensured; in addition, the tailgate assembly has a simple structure, is convenient to manufacture, and is low in cost, and can be widely used in various types of vehicles.

### BRIEF DESCRIPTION OF THE DRAWINGS

Other features and advantages of the present disclosure will be better understood through the following preferred embodiments described in detail in connection with accompanying drawings. In the drawings, same reference numerals indicate same or similar components.
FIG. 1 is a schematic diagram of a vehicle according to an embodiment of the present disclosure;
FIG. 2 is a perspective view of a tailgate assembly of the vehicle of FIG. 1;
FIG. 3 is a perspective view of the tailgate assembly of FIG. 2 from the front side, with the tailgate outer panel being hidden, and with an enlarged portion clearly showing the handle and the abutting portion of the taillight housing;
FIG. 4 is a further enlarged view of the abutting portion in FIG. 3;
FIG. 5 is a cross-sectional view taken along the plane C-C in FIG. 2;
FIG. 6 is a partial cross-sectional view of the tailgate assembly in FIG. 2 along the XY plane.

### DETAILED DESCRIPTION

The implementation and usage of specific embodiments are discussed in detail below. However, it should be understood that the discussed specific embodiments are merely intended to illustrate specific ways of implementing and using the present disclosure, and are not intended to limit the scope of the present disclosure.

In this specification, when describing the structural positions of various components, directional expressions such as "upper", "lower", "left", "right", "front", and "rear" are not absolute, but relative. When the components are arranged as shown in the drawings, these directional expressions are appropriate, but when the positions of the components in the drawings are changed, these directional expressions should be changed accordingly.

In addition, "inner" and "outer" are both defined with reference to the inner and outer directions of the vehicle, for example, "inner side" represents the side facing the interior of the vehicle, that is, the side facing the front of the vehicle for the tailgate assembly, and "outer side" represents the side facing the exterior of the vehicle, that is, the side facing the rear of the vehicle for the tailgate assembly.

In addition, the X direction represents a longitudinal direction of the vehicle (that is, a front-rear direction representing the travelling direction of the vehicle), the Y direction represents a lateral direction of the vehicle (that is, a left-right direction at an angle of 90 degrees relative to the traveling direction), and the Z direction represents a vertical direction of the vehicle (that is, an up-down direction perpendicular to the ground).

A preferred embodiment of the tailgate assembly A of the vehicle V according to the present disclosure will be described in detail below with reference to the accompanying drawings.

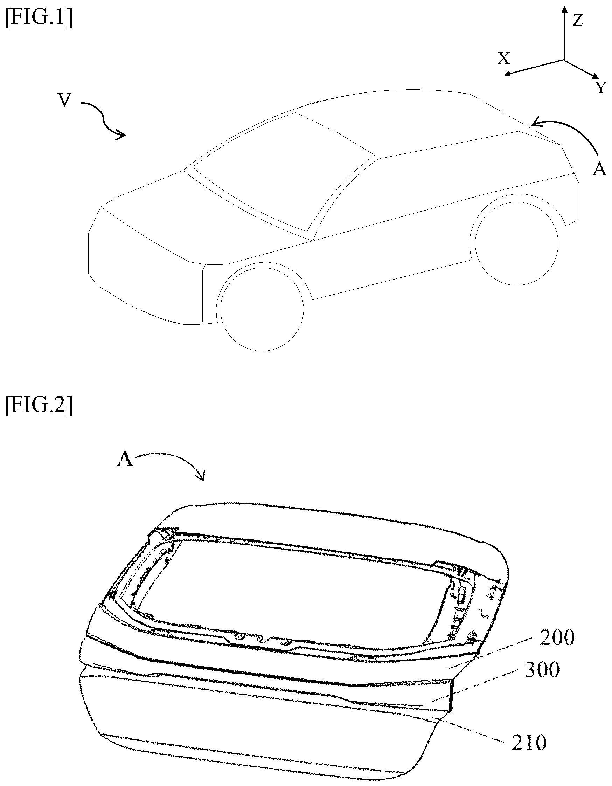

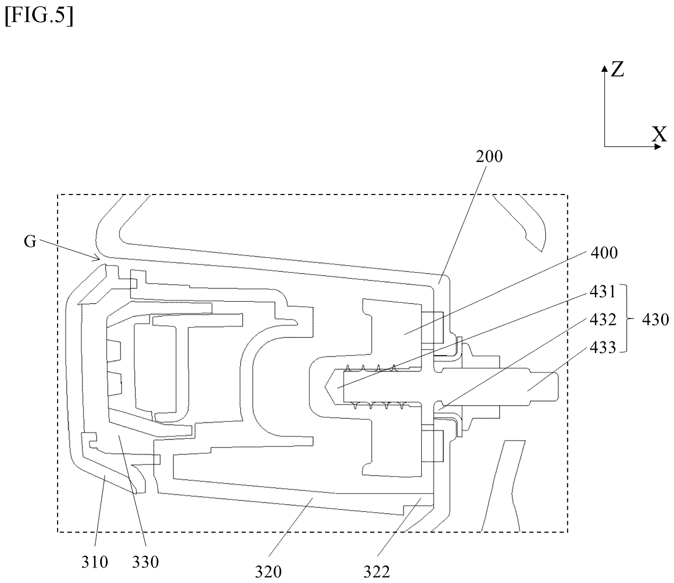

As shown in FIGS. 1 to 3, the tailgate assembly A of the present disclosure comprises a tailgate outer panel 200, a taillight 300 and a handle 400. The tailgate outer panel 200 is provided with a taillight recess 210 extending along the Y direction. More specifically, the taillight recess 210 is provided to the outer side of the tailgate outer panel 200 along the entire Y-direction length of the tailgate outer panel 200 and recessed inwardly, and the taillight 300 extends along the entire Y-direction length of the tailgate outer panel 200 and mounted into the taillight recess 210. The taillight 300 comprises a glass lens 310 oriented towards the rear of the vehicle V and a housing 320 oriented towards the front of the vehicle V, the glass light cover 310 and the housing 320 being connected to each other to define a space 330 (shown in FIG. 5) for accommodating electronics.

A handle 400 is mounted into the taillight recess 210 on the inner side (i.e., front side) of the taillight 300 and connected to the housing 320. More specifically, the handle 400 comprises an operating portion 410 for the user to push the tailgate assembly A to open or close the tailgate, and two connecting portions 420 provided on two sides of the operating portion 410 along the Y direction, for example, two connecting portions 420 symmetrically extending from two lateral ends of the operating portion 410 respectively. Each of the two connecting portions 420 comprises a first fixing portion 430 that fixedly connects the handle 400 to the tailgate outer panel 200.

In addition, the housing 320 comprises two abutting portions 322 extending towards the tailgate outer panel 200, and the two abutting portions 322 are respectively provided below the two first fixing portions 430 along the Z direction and abut against the outer side of the tailgate outer panel 200 along the X direction to prevent the housing 320 from rotating and sagging, thereby avoiding affecting the aesthetics of the appearance of the vehicle due to the increase of the gap G between the upper edge of the glass lens 310 and the taillight recess 210. Preferably, each abutting portion 322 and the corresponding first fixing portion 430 are aligned with each other along the Z direction.

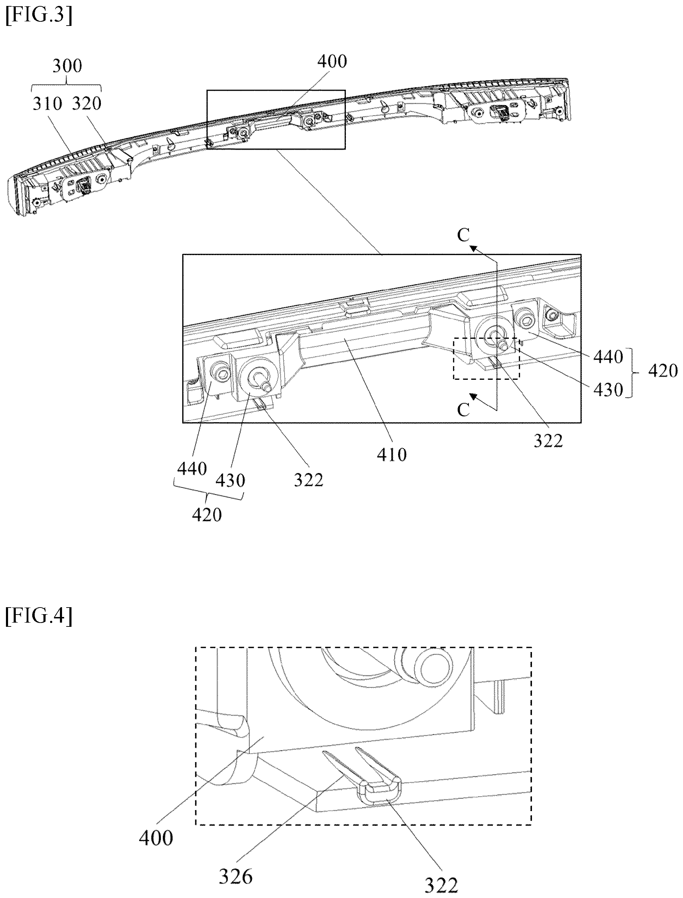

More specifically, as shown in FIGS. 3 to 6, the two first fixing portions 430 are symmetrically provided relative to the center position of the handle 400 along the Y direction, and the housing 320 correspondingly comprises two abutting portions 322 symmetrical relative to the center position thereof along the Y direction. In addition, as shown in FIG. 4, each abutting portion 322 further preferably comprises at least one reinforcing rib 326 extending along the X direction, for example, two reinforcing ribs 326 as shown.

In the illustrated embodiment, the first fixing portion 430 comprises a first blind hole 431 provided on the handle 400, and the tailgate outer panel 200 is provided with a first through hole 432 facing the first blind hole 431, so as to fix the handle 400 to the tailgate outer panel 200 by a first screw 433 passing through the first through hole 432 and screwed into the first blind hole 431.

According to an embodiment, a connecting through hole (not shown) aligned with the first blind hole 431 and the first through hole 432 along the X direction may also be provided on the housing 320, so as to fixedly connect the tailgate outer panel 200, the handle 400 and the housing 320 with each other through the first screw 433.

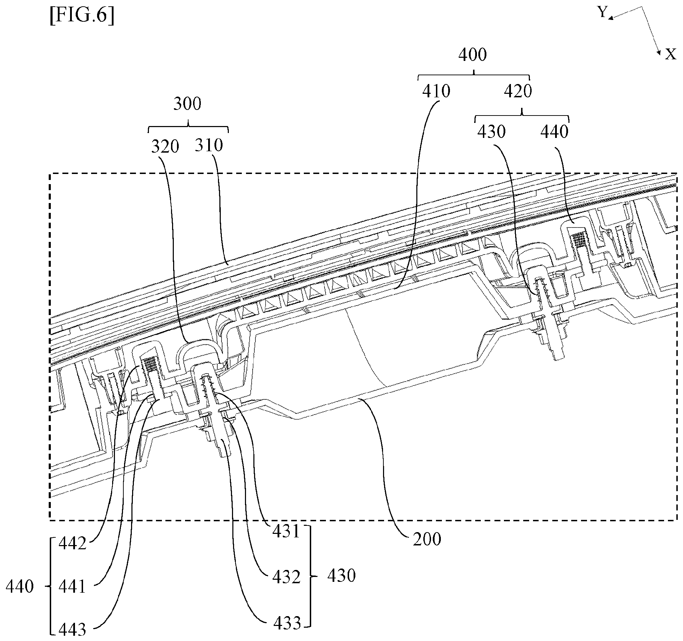

According to another embodiment, as shown in FIGS. 3 and 6, each of the two connecting portions 420 further comprises a second fixing portion 440, and the first fixing portion 430 is closer to the operating portion 410 than the second fixing portion 440. More specifically, the second fixing portion 440 comprises a second through hole 441 provided on the handle 400, and the housing 320 is provided with a second blind hole 442 facing the second through hole 441, so as to fix the handle 400 to the housing 320 by a second screw 443 passing through the second through hole 441 and screwed into the second blind hole 442. That is, the first screw 433 fixedly connects the handle 400 to the tailgate outer panel 200, and the second screw 443 fixedly connects the handle 400 to the housing 320. The advantage of this configuration is that the first fixing portion 430 can absorb and disperse the force from the operating portion 410, preventing the force of the operating portion 410 from being transmitted to the second fixing portion 440 connected to the taillight 300.

It can be understood that, in the tailgate assembly A, the first fixing portion 430 may also be connected to the tailgate outer panel 200 by other suitable fixing means such as snapping, screwing, gluing or welding, which is not limited in the present disclosure. Similarly, the second fixing portion 440 may also be connected to the housing 320 by other suitable fixing means such as snapping, screwing, gluing or welding, which is not limited in the present disclosure.

The technical contents and features of the present disclosure have been disclosed above. However, it is conceivable that, those skilled in the art can make various changes and improvements to the above concept under the creative idea of the present disclosure, all of which fall within the protection scope of the present disclosure.

The description of the foregoing embodiments is illustrative rather than limitative, and the scope of protection of the present disclosure is defined by the appended claims.

## Claims

1. A vehicle (V) comprising a tailgate assembly (A), the vehicle (V) having a longitudinal direction (X) indicative for a direction of travel, a transverse direction (Y) at an angle of 90 degrees relative to the longitudinal direction (X), and a vertical direction (Z) indicative for a direction perpendicular to the ground,
the tailgate assembly (A) comprising:
a tailgate outer panel (200) provided with a taillight recess (210) extending along the transverse direction (Y);
a taillight (300) mounted into the taillight recess (210), and comprising a housing (320); and
a handle (400) for pushing the tailgate assembly (A), the handle (400) being provided in the taillight recess (210) and connected to the housing (320), wherein the handle (400) is connected to the tailgate outer panel (200) by a first fixing portion (430);
**characterized in that**
the housing (320) comprises an abutting portion (322) provided below the first fixing portion (430) along the vertical direction (Z), and abutting against the tailgate outer panel (200) along the longitudinal direction (X).

2. The vehicle (V) according to claim 1, wherein
the abutting portion (322) and the first fixing portion (430) are aligned with each other along the vertical direction (Z).

3. The vehicle (V) according to claim 2, wherein
the handle (400) comprises two first fixing portions (430) symmetrical relative to a central position thereof along the transverse direction (Y), and wherein the housing (320) correspondingly comprises two abutting portions (322) symmetrical relative to a central position thereof along the transverse direction (Y).

4. The vehicle (V) according to claim 1, wherein
the abutting portion (322) further comprises at least one reinforcing rib (326) extending along the longitudinal direction (X).

5. The vehicle (V) according to any one of claims 1 to 4, wherein
the first fixing portion (430) is fixed to the tailgate outer panel (200) by snapping, screwing, riveting, gluing or welding.

6. The vehicle (V) according to any one of claims 1 to 4, wherein
the handle (400) is connected to the housing (320) by the first fixing portion (430).

7. The vehicle (V) according to any one of claims 1 to 4, wherein
the handle (400) comprises a second fixing portion (440) fixed to the housing (320) by snapping, screwing, riveting, gluing or welding.

8. The vehicle (V) according to claim 7, wherein
the handle (400) comprises an operation portion (410) for a user to push the tailgate assembly (A), and wherein the first fixing portion (430) is closer to the operation portion (410) than the second fixing portion (440).

9. The vehicle (V) according to claim 7, wherein
the first fixing portion (430) comprises a first blind hole (431) provided on the handle (400), and the tailgate outer panel (200) is provided with a first through hole (432) facing the first blind hole (431), such that the handle (400) is fixed to the tailgate outer panel (200) by a first screw (433) passing through the first through hole (432) and screwed into the first blind hole (431);
the second fixing portion (440) comprises a second through hole (441) provided on the handle (400), and the housing (320) is provided with a second blind hole (442) facing the second through hole (441), such that the handle (400) is fixed to the housing (320) by a second screw (443) passing through the second through hole (441) and screwed into the second blind hole (442).

## Patentansprüche

1. Fahrzeug (V) mit einer Heckklappenanordnung (A), wobei das Fahrzeug (V) eine Längsrichtung (X), die für eine Fahrtrichtung kennzeichnend ist, eine Querrichtung (Y) unter einem Winkel von 90 Grad relativ zur Längsrichtung (X) und eine vertikale Richtung (Z) aufweist, die für eine Richtung senkrecht zum Boden kennzeichnend ist,
die Heckklappenbaugruppe (A) mit:
eine Heckklappen-Außenverkleidung (200), die mit einer sich in Querrichtung (Y) erstreckenden Heckleuchtenaussparung (210) versehen ist;
eine Rückleuchte (300), die in der Rückleuchtenaussparung (210) montiert ist und ein Gehäuse (320) aufweist, und
einen Handgriff (400) zum Schieben der Heckklappenanordnung (A), wobei der Handgriff (400) in der Heckklappenaussparung (210) vorgesehen und mit dem Gehäuse (320) verbunden ist, wobei der Handgriff (400) mit der Heckklappenaußenwand (200) durch einen ersten Befestigungsabschnitt (430) verbunden ist;
**dadurch gekennzeichnet, dass** das Gehäuse (320) einen Anschlagabschnitt (322) aufweist, der unterhalb des ersten Befestigungsabschnitts (430) entlang der vertikalen Richtung (Z) vorgesehen ist und entlang der Längsrichtung (X) an der äußeren Heckklappenplatte (200) anliegt.

2. Fahrzeug (V) nach Anspruch 1, wobei
der Stoßabschnitt (322) und der erste Befestigungsabschnitt (430) sind miteinander fluchtend
in vertikaler Richtung (Z).

3. Fahrzeug (V) nach Anspruch 2, wobei
der Handgriff (400) umfasst zwei erste Befestigungsabschnitte (430), die symmetrisch bezüglich einer zentralen Position desselben entlang der Querrichtung (Y) sind, und wobei das Gehäuse (320) entsprechend zwei Stoßabschnitte (322) umfasst, die symmetrisch bezüglich einer zentralen Position desselben entlang der Querrichtung (Y) sind.

4. Fahrzeug (V) nach Anspruch 1, wobei
der Stoßabschnitt (322) weist ferner mindestens eine sich erstreckende Verstärkungsrippe (326) auf
entlang der Längsrichtung (X).

5. Fahrzeug (V) nach einem der Ansprüche 1 bis 4, wobei
der erste Befestigungsabschnitt (430) ist durch Einrasten an der Heckklappenaußenwand (200) befestigt,
Schrauben, Nieten, Kleben oder Schweißen.

6. Fahrzeug (V) nach einem der Ansprüche 1 bis 4, wobei der Griff (400) mit dem
Gehäuse (320) durch den ersten Befestigungsabschnitt (430) verbunden ist.

7. Fahrzeug (V) nach einem der Ansprüche 1 bis 4, wobei
der Handgriff (400) weist einen zweiten Befestigungsabschnitt (440) auf, der an dem Gehäuse (320) durch
Einrasten, Schrauben, Nieten, Kleben oder Schweißen.

8. Fahrzeug (V) nach Anspruch 7, wobei
der Handgriff (400) umfasst einen Betätigungsabschnitt (410) für einen Benutzer, um die Heckklappenanordnung (A) zu drücken, und wobei der erste Befestigungsabschnitt (430) näher an dem Betätigungsabschnitt (410) ist als der zweite Befestigungsabschnitt (440).

9. Fahrzeug (V) nach Anspruch 7, wobei
der erste Befestigungsabschnitt (430) ein erstes Sackloch (431) aufweist, das an dem Griff (400) vorgesehen ist, und die Heckklappenaußenwand (200) mit einem ersten Durchgangsloch (432) versehen ist, das dem ersten Sackloch (431) zugewandt ist, sodass der Griff (400) an der Heckklappenaußenwand (200) durch eine erste Schraube (433) befestigt ist, die durch das erste Durchgangsloch (432) hindurchgeht und in das erste Sackloch (431) geschraubt ist;
der zweite Befestigungsabschnitt (440) umfasst ein zweites Durchgangsloch (441), das an dem Handgriff (400) vorgesehen ist, und das Gehäuse (320) ist mit einem zweiten Sackloch (442) versehen, das dem zweiten Durchgangsloch (441) zugewandt ist, sodass der Handgriff (400) an dem Gehäuse (320) durch eine zweite Schraube (443) befestigt ist, die durch das zweite Durchgangsloch (441) hindurchgeht und in das zweite Sackloch (442) geschraubt ist.

## Revendications

1. Véhicule (V) comprenant un ensemble hayon (A), le véhicule (V) ayant une direction longitudinale (X) indicative pour une direction de déplacement, une direction transversale (Y) à un angle de 90 degrés par rapport à la direction longitudinale (X), et une direction verticale (Z) indicative pour une direction perpendiculaire au sol,
l'ensemble hayon (A) comprenant:
un panneau extérieur de hayon (200) muni d'un évidement de feu arrière (210) s'étendant selon la direction transversale (Y);
un feu arrière (300) monté dans l'évidement de feu arrière (210), et comprenant un boîtier (320); et
une poignée (400) de poussée de l'ensemble hayon (A), la poignée (400) étant prévue dans l'évidement de feu arrière (210) et reliée au boîtier (320), la poignée (400) étant reliée au panneau extérieur de hayon (200) par une première partie de fixation (430);
**caractérisé en ce que** le logement (320) comprend une portion de butée (322) prévue sous la première portion de fixation (430) selon la direction verticale (Z), et en butée contre le panneau extérieur de hayon (200) selon la direction longitudinale (X).

2. Véhicule (V) selon la revendication 1, **caractérisé en ce que**
la portion de butée (322) et la première portion de fixation (430) sont alignées l'une avec l'autre
selon la direction verticale (Z).

3. Véhicule (V) selon la revendication 2, **caractérisé en ce que**
la poignée (400) comprend deux premières parties de fixation (430) symétriques par rapport à une poste centrale de celle-ci selon la direction transversale (Y), et dans lequel le logement (320) comprend en correspondance deux parties de butée (322) symétriques par rapport à une poste centrale de celle-ci selon la direction transversale (Y).

4. Véhicule (V) selon la revendication 1, **caractérisé en ce que**
la portion de butée (322) comprend en outre au moins une nervure de renfort (326) s'étendant
selon la direction longitudinale (X).

5. Véhicule (V) selon l'une quelconque des revendications 1 à 4, **caractérisé en ce que** la première partie de fixation (430) est fixée au panneau extérieur de hayon (200) par encliquetage,
vissage, rivetage, collage ou soudage.

6. Véhicule (V) selon l'une quelconque des revendications 1 à 4, **caractérisé en ce que** la poignée (400) est reliée au boîtier (320) par la première partie de fixation (430).

7. Véhicule (V) selon l'une quelconque des revendications 1 à 4, **caractérisé en ce que**
la poignée (400) comprend une deuxième partie de fixation (440) fixée au boîtier (320) par
claquage, vissage, rivetage, collage ou soudage.

8. Véhicule (V) selon la revendication 7, **caractérisé en ce que**
la poignée (400) comprend une partie de manœuvre (410) permettant à un utilisateur de pousser l'ensemble hayon (A), et dans laquelle la première partie de fixation (430) est plus proche de la partie de manœuvre (410) que la deuxième partie de fixation (440).

9. Véhicule (V) selon la revendication 7, **caractérisé en ce que**
la première partie de fixation (430) comprend un premier trou borgne (431) ménagé sur la poignée (400), et le panneau extérieur de hayon (200) est pourvu d'un premier trou traversant (432) en regard du premier trou borgne (431), de sorte que la poignée (400) est fixée au panneau extérieur de hayon (200) par une première vis (433) traversant le premier trou traversant (432) et vissée dans le premier trou borgne (431);
la deuxième partie de fixation (440) comprend un deuxième trou traversant (441) prévu sur la poignée (400), et le logement (320) est pourvu d'un deuxième trou borgne (442) en regard du deuxième trou traversant (441), de sorte que la poignée (400) est fixée au logement (320) par une deuxième vis (443) traversant le deuxième trou traversant (441) et vissée dans le deuxième trou borgne (442).
